# EUROPÄISCHE PATENTSCHRIFT

(11) **EP 4 471 639 B1**
(45) Veröffentlichungstag und Bekanntmachung des Hinweises auf die Patenterteilung: **21.01.2026**
(21) Anmeldenummer: 24169955.2
(22) Anmeldetag: 12.04.2024
(51) Int. Cl.: G06F 21/62, G06F 21/12, G05B 19/05

(54) **SICHERHEITSSYSTEM MIT EINEM SICHERHEITSKANAL ZUR AUSFÜHRUNG UND VERWALTUNG VON SICHERHEITSFUNKTIONEN**
SECURITY SYSTEM WITH A SECURITY CHANNEL FOR EXECUTING AND MANAGING SECURITY FUNCTIONS
SYSTÈME DE SÉCURITÉ COMPRENANT UN CANAL DE SÉCURITÉ POUR L'EXÉCUTION ET LA GESTION DE FONCTIONS DE SÉCURITÉ

(30) Priorität: 30.05.2023 DE 102023114064
(43) Veröffentlichungstag der Anmeldung: 04.12.2024
(73) Patentinhaber: SICK AG, 79183 Waldkirch (DE)
(72) Erfinder: Krauss, Sven Stefan, 78176 Blumberg (DE); Keller, Andreas, 78183 Hüfingen (DE); Lautemann, Andreas, 78199 Bräunlingen (DE)

(56) Entgegenhaltungen:
- EP-A1- 3 098 673
- DE-A1- 102015 120 347
- DE-T5- 112014 006 323

## Beschreibung

Die vorliegende Erfindung betrifft ein Sicherheitssystem mit einem ersten Sicherheitskanal zur Ausführung und Verwaltung von Sicherheitsfunktionen gemäß dem Oberbegriff von Anspruch 1.

Die Erfindung betrifft ein Sicherheitssystem als funktional sicheres Gerät gemäß IEC 61508 bis einschließlich Sicherheitsintegritätslevel SIL 3.

Typische Systemarchitekturen für SIL3-Systeme basieren auf der folgenden Architektur. Für SIL3-Systeme gibt es in der Regel ein 2-Kanal-System mit Gegenkontrollen zwischen Kanälen. Wenn der Quervergleich Abweichungen feststellt, löst er den Übergang in den physikalisch sicheren Zustand des Systems unter Verwendung der Sicherheitsfehler-Verarbeitungseinheit aus. Die Sicherheitsfunktionen sind fest in das System integriert. Ein Ausführungsmonitor überwacht, ob die Sicherheitsfunktionen ausgeführt werden. Falls eine Sicherheitsfunktion nicht ausgeführt wird, bewirkt es einen Übergang in den physisch sicheren Zustand des Systems unter Verwendung einer Sicherheitsfehlerverarbeitungseinheit. Derzeitige Architekturen beschränken sich auf fest eingebaute Sicherheitsfunktionen.

Gemäß der Norm IEC 61508 werden Sicherheitsanforderungsstufen ("Safety Integrity Level" - SIL; es gibt SIL 1 bis SIL 4) definiert. Diese ist ein Maß für die notwendige bzw. erreichte risikomindernde Wirksamkeit von Sicherheitsfunktionen. Die geringsten Anforderungen nach der Norm IEC 61508 stellt SIL 1. Wenn nach der Entwicklung sicherheitsbezogener Systeme gezeigt werden kann, dass für die Sicherheitsfunktionen die Anforderungen für eine SIL erfüllt werden, dient die SIL als Maß für die Wirksamkeit der Sicherheitsfunktionen. Da die Wirksamkeit sowohl durch die Zuverlässigkeit der Ausübung der Sicherheitsfunktion im Gefährdungsfall als auch durch unmittelbare Abschaltung der gefahrverursachenden Systeme im Falle einer Fehlererkennung in den sicherheitsbezogenen Systemen auch außerhalb von Gefährdungssituationen erreicht werden kann, darf nicht allein von "Zuverlässigkeit" der Sicherheitsfunktion gesprochen werden. Die notwendige SIL kann durch eine Gefährdungs- und Risikoanalyse ermittelt werden. SIL1, SIL 2 oder SIL 3 sind übliche Sicherheitsanforderungsstufen für das vorliegende Sicherheitssystem.

Als wesentliche Parameter für die Zuverlässigkeit der Sicherheitsfunktion von Sicherheitssystemen werden die Berechnungsgrundlagen für PFH (probability of dangerous failure per hour - Wahrscheinlichkeit des gefahrbringenden Versagens pro Stunde) und PFD (probability of dangerous failure on demand - Wahrscheinlichkeit eines gefahrbringenden Versagens bei Anforderung) geliefert. Ersterer bezieht sich auf High-Demand-Systeme, also solche mit einer hohen Anforderungsrate ("hoch": mindestens eine Anforderung pro Jahr), letzterer auf Low-Demand-Systeme, die während ihrer Betriebsdauer seltener als einmal jährlich betätigt werden. Letztere sind vornehmlich in der Prozessindustrie von Bedeutung, wobei für diesen Industriezweig die weitergehende IEC 61511 heranzuziehen ist. Die besondere Problematik einer Low-Demand-Anwendung besteht darin, dass die allermeisten Sicherheitssysteme, die eine Sicherheitsfunktion ausüben, durch den regelmäßigen Zustandswechsel ihrer Schaltglieder (morgendliches Einschalten im Betrieb, abendliches Ausschalten) eine interne Diagnose durchführen, dieser Zustandswechsel aber in manchen Anlagen nicht gewährleistet ist, die über Monate oder Jahre dauerhaft in Betrieb sind.

Die Wahrscheinlichkeit einzelner Ausfälle steigt proportional mit der Anzahl der in Verkehr befindlichen Produkte und deren Alterung, wobei Ausfälle, deren Ursachen systematischer Art sind (z. B. Fehler in der Software, fehlerhafte Dimensionierung von Baueinheiten, fehlerhafte oder ungenaue Werkzeuge oder Messmittel) alle Produkte betreffen, während zufällige Fehler nur eine gewisse Teileinheit der Produkte betreffen. Systematische Fehler, die lange Zeit unentdeckt bleiben können, weil die auslösenden Randbedingungen selten oder unwahrscheinlich sind, werden nun durch die Auswertung der Historie besonders wirksam entdeckt.

Die Ausfallarten ("Failure Modes") werden danach aufgeteilt, in welche Richtung sie gehen: "sicher" (safe) und gefahrbringend bzw. "unsicher" (dangerous). Da die Sicherheitsfunktion eines Sicherheitssystemes eindeutig beschrieben werden kann und muss, sind Zustände wie "etwas gefährlich" normativ nicht erfasst. Diese beiden Zustände werden unter Hinzunahme der Diagnose weiter aufgeschlüsselt, so dass unter den denkbaren möglichen Fehlerarten "sicher-entdeckt" (safe-detected), "sicherunentdeckt" (safe undetected), "unsicher-entdeckt" (dangerous-detected), "unsicherunentdeckt" (dangerous-undetected) letztgenannte als kritisch zu bewerten sind, da sie durch die "Diagnose" unentdeckt bleiben und zu der falschen Annahme führen können, dass das Sicherheitssystem einwandfrei funktioniere. Systematische Fehler sind durch Diagnoseeinrichtungen nur unzureichend aufzudecken, da auch die Umsetzung der Diagnose selbst auf den fehlerhaften Annahmen beruhen kann, die zum systematischen Fehler führten.

"Diagnose" wird in der Norm als ein automatisch ablaufender Prozess definiert, dessen Wirksamkeit nicht vom menschlichen Zutun abhängt. (Als Beispiel mag der Selbsttest eines Not-Aus-Relais dienen, welches bei seinem Einschalten einen internen Zyklus durchläuft, welcher alle sicherheitsrelevanten Schaltglieder mit einbezieht und das Sicherheitssystem nur "freischaltet", wenn deren Funktion gewährleistet ist.). Eine Sonderform der Diagnose ist die sog. Wiederholungsprüfung ("Proof-Test"), welche in festgelegten und mathematisch berechenbaren Abständen (Proof-Test-Intervall) erfolgen muss, wenn die interne Diagnose nicht ausreichend ist, um über einen langen Zeitraum einen sicheren Betrieb zu gewährleisten. Rechnerisch gesehen ist dies dann der Fall, wenn der PFD(t)-Wert des Sicherheitssystemes das zulässige zeitliche Intervall für die jeweilige SIL verlässt. I. d. R. sind bei einem "Proof-Test" Baueinheiten auszutauschen, um das Sicherheitssystem in einen "Wie-neu"-Zustand zu versetzen, so dass der PFD(t)-Wert wieder in einen unterkritischen Bereich absinkt. Für einfache Sicherheitssysteme wird es aus wirtschaftlichen Gründen in der Praxis angestrebt, das Proof-Test-Intervall mindestens so groß wie die Lebensdauer des Sicherheitssystemes auszulegen.

Aus den Parametern PFH und PFD sowie einigen anderen hier nicht näher betrachteten Werten lässt sich die SIL ablesen bzw. berechnen. Des Weiteren wird der SFF (Anteil sicherer Ausfälle, engl. Safe Failure Fraction) eingeführt, ein Maß dafür, welcher Anteil aller denkbaren Fehler in die sichere Richtung geht. Als "Fehler" werden generell nur solche Ausfälle betrachtet, die durch Alterungsprozesse oder Umwelteinflüsse bei einem Betrieb innerhalb der spezifizierten Betriebsparameter entstehen können. Manipulation oder nicht sachgemäße Anwendung sind nicht Gegenstand der Fehlerbetrachtung, die in einer sog. FMEA (Failure Modes and Effects Analysis) oder FMEDA (Failure Modes, Effects and Diagnostics Analysis) stattfindet.

Allgemein kann gesagt werden, dass zwei- oder mehrkanalige Sicherheitssysteme, bei denen jeder Kanal für sich allein die Sicherheitsfunktion auslösen kann, mit weniger technischem Aufwand eine höhere SIL erreichen können als solche, die nur einen Kanal besitzen. Als Kanal wird dabei der Informationsfluss durch eine Sicherheitskette (Safety-Loop) bezeichnet, angefangen von der Anforderung der Sicherheitsfunktion (z. B. durch einen Sensor, Näherungsmelder, Lichtschranke oder Taster), endend mit dem Aktor bzw. Stellglied, welches den sicheren Zustand einer Maschine einleitet.

Eine Freischaltung spezieller Sicherheitsfunktionen oder auch Sensorfunktionen mit Lizenzschlüsseln ist Stand der Technik. Jedoch soll eine Lösung gefunden werden, die für den Einsatz in funktionssicheren eingebetteten Geräten geeignet ist, da für diese Geräte besondere technische Anforderungen bestehen.

Die DE 10 2015 120 347 A1 offenbart eine Sicherheitssteuerungseinrichtung, umfassend mindestens ein Eingabemodul mit einer Anzahl von Eingangsschnittstellen, mindestens ein Ausgabemodul mit einer Anzahl von Ausgangsschnittstellen sowie eine Recheneinheit, die an das mindestens eine Eingabemodul und an das mindestens eine Ausgabemodul angeschlossen ist und einen programmierbaren Prozessor und einen Festspeicher aufweist, wobei in dem Festspeicher ein Betriebsprogramm für den Prozessor mit Programmcodemitteln in maschinenlesbarer Form zur Bereitstellung einer Funktionsbibliothek mit einer Anzahl n von Funktionen der Sicherheitssteuerungseinrichtung nicht-flüchtig gespeichert ist, wobei die Sicherheitssteuerungseinrichtung ein nicht-flüchtiges, überschreibbares Speichermittel aufweist, das in die Recheneinheit integriert ist oder in einer Speichermittelschnittstelle der Recheneinheit austauschbar aufgenommen ist, wobei in dem Speichermittel eine Anzahl von Funktionsaktivierungscodes abrufbar gespeichert ist und jedem der Funktionsaktivierungscodes eine Funktion der Funktionsbibliothek derart zuordenbar ist, dass durch eine logische Verknüpfung der Funktionsaktivierungscodes mit den diesen zugeordneten Funktionen der Funktionsbibliothek nur diejenigen Funktionen der Funktionsbibliothek aktivierbar sind, deren Funktionsaktivierungscodes in dem Speichermittel gespeichert sind.

Die EP 3 098 673 A1 offenbart eine automatische Validierung von Sicherheitsfunktionen eines mit Teilsystem-Modulen modular aufgebauten Sicherheitssystems. Sicherheitsrelevante Soll-Kennwerte eines Systems, welches ein aus wenigstens zwei Teilsystem-Modulen modular aufzubauendes oder aufgebautes Sicherheitssystem ausbildet, insbesondere von Restfehlerwahrscheinlichkeiten, Ausfallraten und/oder Gesamtreaktionszeiten, werden in maschinenlesbarer Form im Speicher einer Überprüfungseinrichtung hinterlegt und lokale, modulspezifische sicherheitsrelevante Ist-Kennwerte zumindest eines jeden einzelnen Teilsystem-Moduls, welches zum modularen Aufbau des Sicherheitssystems des Systems eingesetzt wird oder eingesetzt werden soll, werden in maschinenlesbarer Form im jeweiligen Teilsystem-Modul hinterlegt. Die lokalen, modulspezifischen sicherheitsrelevanten Ist-Kennwerte werden von den einzelnen Teilsystem-Modulen, welche aktuell das Sicherheitssystem des Systems modular aufbauen, an die Überprüfungseinrichtung übertragen und automatisch zu sich beim Zusammenwirken der einzelnen Teilsystem-Module ergebenden, übergreifenden sicherheitsrelevanten Ist-Kennwerten verarbeitet. Anschließend werden die sich ergebenden, übergreifenden sicherheitsrelevanten Ist-Kennwerte mit den im Speicher der Überprüfungseinrichtung hinterlegten Soll-Kennwerten des Systems durch die Überprüfungseinrichtung verglichen und in Abhängigkeit des Vergleichsergebnisses automatisch ein Reaktionssignal generiert.

Die DE 11 2014 006 323 T5 offenbart eine SPS-Einheit, die an einer Basis, mit einem Systembus angebracht ist und zusammen mit einer anderen SPS-Einheit eine speicherprogrammierbare Steuerung bildet, wobei die SPS-Einheit umfasst: eine als Systembusschnittstelle funktionierende Einheit, die direkt Daten über den Systembus zu und von einer anderen an der Basis angebrachten SPS-Einheit sendet und empfängt; eine Dualisierungseinstellungsbeibehaltungseinheit, die eine Einstellung beibehält, welche angibt, ob die SPS-Einheit allein oder durch Dualisierung mit einer weiteren SPS-Einheit zu verwenden ist; und eine Informationsvergleichseinheit, die verarbeitete Information von einer weiteren SPS-Einheit, die Gegenstück der Dualisierung ist, über die als Systembusschnittstelle funktionierende Einheit erhält, und verarbeitete Information von einem internen Prozess miteinander vergleicht, wobei in einem Fall, bei dem die Einstellung angibt, dass die SPS-Einheit durch die Dualisierung zusammen mit einer weiteren SPS-Einheit verwendet wird, und wenn ein Ergebnis des Vergleichs durch die Informationsvergleichseinheit Konsistenz angibt, die SPS-Einheit die verarbeitete Information zu einer Sicherheitsausgabevorrichtung oder einer weiteren SPS-Einheit, die zu einem Gegenstück der Dualisierung verschieden ist sendet, um die verarbeitete Information zu verarbeiten, und wobei wenn das Ergebnis des Vergleichs auf eine Inkonsistenz hindeutet, die SPS-Einheit einen Fehler-Prozess ausführt.

Eine Aufgabe der Erfindung besteht darin, ein verbessertes Sicherheitssystem bereitzustellen.

Die Aufgabe wird gemäß Anspruch 1 gelöst durch ein Sicherheitssystem mit einem ersten Sicherheitskanal zur Ausführung und Verwaltung von Sicherheitsfunktionen, wobei der erste Sicherheitskanal eine Lizenzschlüsselverwaltungseinheit für Lizenzen für Sicherheitsfunktionen und einen ersten Sicherheitsspeicher für Sicherheitsfunktionen aufweist, wobei der erste Sicherheitskanal eine erste Ausführungsschutzeinheit für Sicherheitsfunktionen und eine erste Ausführungsüberwachungseinheit für Sicherheitsfunktionen und eine erste sichere Verarbeitungseinheit zur Ausgabe eines Sicherheitsstatus aufweist.

Das Sicherheitssystem weist gemäß der Erfindung mindestens den Sicherheitsspeicher, die Ausführungsschutzeinheit und die Ausführungsüberwachungseinheit auf.

Der Sicherheitsspeicher speichert auf sichere Art und Weise, welche Sicherheitsfunktionen von einem Anwender oder Kunden mit Lizenzschlüssel von der Lizenzschlüsselverwaltungseinheit freigeschaltet wurden. Hierzu weist der Sicherheitsspeicher eine Vielzahl von Sicherheitsfunktionen auf, die in dem Sicherheitsspeicher gespeichert sind. Zu jeder Sicherheitsfunktion ist ein Lizenzschlüssel abgespeichert. Wird ein zulässiger Lizenzschlüssel für eine bestimmte Sicherheitsfunktion eingegeben und stimmt der zulässige Lizenzschlüssel mit dem abgespeicherten Lizenzschlüssel überein, so kann die Sicherheitsfunktion in dem Sicherheitssystem benutzt werden.

Somit erfolgt durch den Sicherheitsspeicher eine sichere Speicherung, ob eine funktional sichere Sicherheitsfunktion entriegelt ist oder nicht.

Bei den Sicherheitsfunktionen kann es sich beispielsweise um die folgenden Sicherheitsfunktionen handeln:
- Überwachung und Begrenzung von Maschinenparametern wie Drehrichtung, Drehzahl, Position, Geschwindigkeit und Beschleunigung;
- Überwachung und Erkennung von Vibrationen, beispielsweise von Maschinenteilen oder Sensoren;
- Überwachung und Erkennung von Kippbewegungen, beispielsweise von Maschinenteilen oder Sensoren;
- Überwachung und sichere Erkennung einer Winkellage (Neigung oder Lenkwinkel)
- Erkennung von Hindernissen oder Personen.

Beispielsweise handelt es sich bei den Sicherheitsfunktionen um sichere Sensorfunktionen:
- Erkennung von Maschinenparametern wie sichere Richtung, Geschwindigkeit, Drehzahl, Position, Beschleunigung;
- sicheres Schalten und Abschalten von Einrichtungen in Abhängigkeit der Sensordaten;
- sichere Winkelerfassung;
- sichere Drehratenerfassung;
sowie die Kombination, beispielsweise eine Fusion von Sensordaten mehrerer zusammengeschalteter Sensoren, wie z.B:
- sichere Raumlagenerkennung (Rollwinkel, Nickwinkel und Gierwinkelerfassung);
- sichere Positionserkennung im Raum (Koordinaten X, Y, Z im Raum);
- sichere Raumlagenerkennung und Orientierungserkennung im Raum (Koordinaten X, Y, Z im Raum, Rollwinkel, Nickwinkel und Gierwinkelerfassung).

Die Ausführungsschutzeinheit stellt sicher, dass nur freigeschaltete Sicherheitsfunktionen ausgeführt werden. Freigeschaltete Sicherheitsfunktionen sind Sicherheitsfunktionen, zu denen ein gültiger Lizenzschlüssel eingegeben wurde. Die Ausführungsschutzeinheit stellt damit sicher, dass nur Sicherheitsfunktionen ausgeführt werden, zu denen ein gültiger Lizenzschlüssel vorliegt.

Somit erfolgt durch die Ausführungsschutzeinheit ein sicherer Ausführungsschutz, damit nur freigeschaltete funktional sichere Sicherheitsfunktionen oder Sensorfunktionen ausgeführt werden.

Die Ausführungsüberwachungseinheit überwacht, dass alle freigeschalteten Sicherheitsfunktionen auch ausgeführt werden. Im Falle eines Ausführungsfehlers wird das Sicherheitssystem in den physisch sicheren Zustand unter Verwendung der sicheren Verarbeitungseinheit überführt. Die Ausführungsüberwachungseinheit sichert, dass alle freigeschalteten Sicherheitsfunktionen auch zwingend ausgeführt werden. Dadurch wird verhindert, dass wichtige Sicherheitsfunktionen nicht inaktiv sind, sondern es wird dafür gesorgt, dass die Sicherheitsfunktionen, die freigeschaltet sind, auch aktiv sind.

Damit erfolgt durch die Ausführungsüberwachungseinheit eine sichere Überwachung, dass freigeschaltete funktional sichere Sensorfunktionen auch zwingend ausgeführt werden.

Die Ausführungsschutzeinheit hat Lesezugriff auf den Sicherheitsspeicher, um festzustellen, ob die Sicherheitsfunktion entriegelt ist, um die Ausführung der entriegelten bzw. entsperrten Sicherheitsfunktion zu starten.

Die Ausführungsüberwachungseinheit hat auch Lesezugriff auf den Sicherheitsspeicher und überwacht die Ausführung der entsperrten Sicherheitsfunktionen durch einen gesetzten Status "AUSFÜHRUNG ERWARTET" für nicht gesperrte Sicherheitsfunktionen. Wenn die Ausführung einer entsperrten Sicherheitsfunktion beendet ist, wird der Status auf "AUSGEFÜHRT" gesetzt. Vor einer nächsten zyklischen Iteration wird der Status wieder auf "AUSFÜHRUNG ERWARTET" gesetzt.

Wenn die entsperrte Sicherheitsfunktion nicht ausgeführt wird, setzt die Ausführungsüberwachungseinheit den Status "AUSFÜHRUNG FEHLGESCHLAGEN" und das Sicherheitssystem geht in einen physisch sicheren Zustand über, mittels der Verarbeitungseinheit. Beispielsweise werden sichere Ausgänge von der Verarbeitungseinheit deaktiviert.

In Weiterbildung der Erfindung ist ein zweiter Sicherheitskanal vorgesehen, wobei der erste Sicherheitskanal und der zweite Sicherheitskanal parallel angeordnet sind, wobei der zweite Sicherheitskanal einen zweiten Sicherheitsspeicher für Sicherheitsfunktionen, eine zweite Ausführungsschutzeinheit für Sicherheitsfunktionen, und eine zweite Ausführungsüberwachungseinheit für Sicherheitsfunktionen und eine zweite sichere Verarbeitungseinheit zur Ausgabe eines Sicherheitsstatus aufweist, wobei zwischen dem ersten Sicherheitsspeicher und dem zweiten Sicherheitsspeicher eine Sicherheitsspeicher-Kommunikationsverbindung vorgesehen ist, wobei zwischen der ersten Ausführungsüberwachungseinheit und der zweiten Ausführungsüberwachungseinheit eine Ausführungsüberwachungseinheit-Kommunikationsverbindung vorgesehen ist und wobei zwischen der ersten sicheren Verarbeitungseinheit und der zweiten sicheren Verarbeitungseinheit eine Verarbeitungseinheit-Kommunikationsverbindung vorgesehen ist.

Gemäß der Weiterbildung der Erfindung liegt ein zweikanaliges System vor, wobei beide Kanäle die wesentlichen Komponenten nämlich den Sicherheitsspeicher, die Ausführungsschutzeinheit und die Ausführungsüberwachungseinheit aufweisen. Mittels der zugehörigen Kommunikationsverbindungen erfolgen zugehörige Gegenkontrollen und Diagnosen zur Gewährleistung der Sicherheitsintegrität.

In Weiterbildung der Erfindung ist der Sicherheitsspeicher ausgebildet, Sicherheitsfunktionen zu sperren oder freizugeben.

Kern der Weiterbildung ist der Sicherheitsspeicher, der für jede Sicherheitsfunktion speichert, ob die Funktion entriegelt (Zustand "NICHT GESPERRT") oder verriegelt ist (Zustand "GESPERRT"). Der voreingestellte Standardzustand ist beispielsweise "GESPERRT". Die Zustände werden intern verschlüsselt und in Variablen, beispielsweise ähnlich virtuellen Sicherungen gespeichert, die emulieren, dass sie beispielsweise nur ein einziges Mal geschrieben werden können, um zu verhindern, dass entsperrte Funktionen aufgrund von Speicherfehlern wieder gesperrt werden.

Nach dem Ausschöpfen der Aktivierungen kann mittels kryptografischer Hashfunktion (z.B. HMAC mit SHA-512) über die Aktivierungszustände deren Status unveränderlich eingefroren werden. Eine normale Checksumme wie CRC16 wäre dafür nicht ausreichend, weil diese ohne Probleme manipulierbar/errechenbar wäre.

Dies wären die Software-Entsprechungen einer mechanischen Verschaltung von Schlüsselschaltern, bei dem der erste Schlüssel dafür sorgt (=Hash), dass die anderen Schlüssel nicht mehr bewegt und ebenfalls nicht mehr abgezogen werden können. Zustände der Schlüsselschalter können aktiviert oder nicht aktiviert sein.

Dadurch ergeben sich zwei Vorteile:
Erstens liegt eine Manipulationssicherheit durch eine kryptografische Hashfunktion vor. Jede Manipulation führt in den Fehlerfall. Dadurch ist die funktionale Sicherheit gewährleistet.

Zweitens liegt eine einfache Nachvollziehbarkeit vor, welche Sicherheitsfunktionen aktiviert sind und welche nicht, weil diese Information an sich unverschlüsselt vorliegt. Dies ist ebenfalls ein Voreinheit für die funktionale Sicherheit.

In Weiterbildung der Erfindung weist der Sicherheitsspeicher pro Sicherheitsfunktion einen Zähler auf, um eine Sperrung oder eine Freigabe zu zählen und die Sicherheitsfunktionen nur für eine begrenzte Anzahl zu sperren oder freizugeben.

Kern der Weiterbildung ist quasi eine virtuelle Nachbildung von Schmelz-Sicherungen, die einen vorbestimmten Ausgangzustand aufweisen, also den anfänglichen Zählerstand des Zählers und diesen nur einmal ändern können, nämlich zum nächst höheren Zählerstand. Um dies zu gewährleisten, wird pro Sicherheitsfunktion ein Zähler vorgesehen und ein Zählerwert gespeichert, wobei der Zählerwert angibt, wie oft ein Schreibzugriff stattgefunden hat. Um dem Anwender bzw. Kunden mehr Flexibilität zu geben, kann beispielsweise ein einmaliges, ein zweimaliges oder ein dreimaliges Freigeben oder Sperren einer Sicherheitsfunktion vorgesehen sein.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: ein Sicherheitssystem mit einem ersten Sicherheitskanal;
- Figur 2: ein Sicherheitssystem mit einem ersten Sicherheitskanal und einem zweiten Sicherheitskanal;
- Figur 3: Aktivierungszustände deren Status unveränderlich eingefroren werden;
- Figur 4: Statusangaben in der Ausführungsüberwachungseinheit;
- Figur 5: ein Sicherheitssystem mit einem ersten Sicherheitskanal und einem zweiten Sicherheitskanal.

In den nachfolgenden Figuren sind identische Einheiten mit identischen Bezugszeichen versehen.

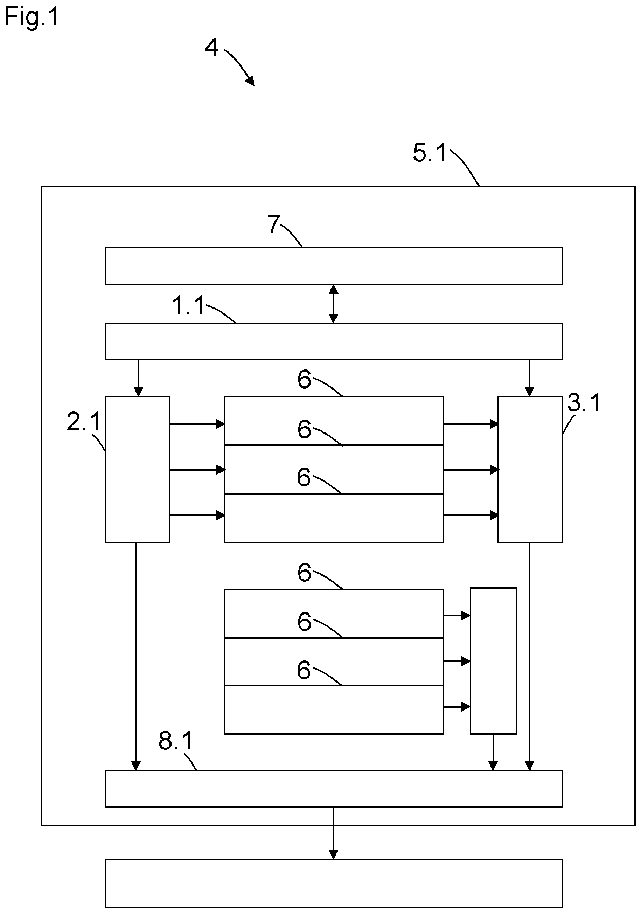

Figur 1 zeigt ein Sicherheitssystem 4 mit einem ersten Sicherheitskanal 5.1 zur Ausführung und Verwaltung von Sicherheitsfunktionen 6, wobei der erste Sicherheitskanal 5.1 eine Lizenzschlüsselverwaltungseinheit 7 für Lizenzen für Sicherheitsfunktionen 6 und einen ersten Sicherheitsspeicher 1.2 für Sicherheitsfunktionen 6 aufweist, wobei der erste Sicherheitskanal 5.1 eine erste Ausführungsschutzeinheit 2.1 für Sicherheitsfunktionen 6 und eine erste Ausführungsüberwachungseinheit 3.1 für Sicherheitsfunktionen 6 und eine erste sichere Verarbeitungseinheit 8.1 zur Ausgabe eines Sicherheitsstatus aufweist.

Das Sicherheitssystem 4 weist mindestens den Sicherheitsspeicher 1.1, die Ausführungsschutzeinheit 2.1 und die Ausführungsüberwachungseinheit 3.1 auf.

Der Sicherheitsspeicher 1.1 speichert auf sichere Art und Weise, welche Sicherheitsfunktionen 6 von einem Anwender oder Kunden mit Lizenzschlüssel von der Lizenzschlüsselverwaltungseinheit 7 freigeschaltet wurden. Hierzu weist der Sicherheitsspeicher 1.1 eine Vielzahl von Sicherheitsfunktionen 6 auf, die in dem Sicherheitsspeicher 1.1 gespeichert sind. Zu jeder Sicherheitsfunktion 6 ist ein Lizenzschlüssel abgespeichert. Wird ein zulässiger Lizenzschlüssel für eine bestimmte Sicherheitsfunktion 6 eingegeben und stimmt der zulässige Lizenzschlüssel mit dem abgespeicherten Lizenzschlüssel überein, so kann die Sicherheitsfunktion 6 in dem Sicherheitssystem 4 benutzt werden.

Somit erfolgt durch den Sicherheitsspeicher 1.1 eine sichere Speicherung, ob eine funktional sichere Sicherheitsfunktion 6 entriegelt ist oder nicht.

Beispielsweise handelt es sich bei den Sicherheitsfunktionen 6 um sichere Sensorfunktionen.

Die Ausführungsschutzeinheit 2.1 stellt sicher, dass nur freigeschaltete Sicherheitsfunktionen 6 ausgeführt werden. Freigeschaltete Sicherheitsfunktionen 6 sind Sicherheitsfunktionen 6, zu denen ein gültiger Lizenzschlüssel eingegeben wurde. Die Ausführungsschutzeinheit 2.1 stellt damit sicher, dass nur Sicherheitsfunktionen 6 ausgeführt werden, zu denen ein gültiger Lizenzschlüssel vorliegt.

Somit erfolgt durch die Ausführungsschutzeinheit 2.1 ein sicherer Ausführungsschutz, damit nur freigeschaltete funktional sichere Sicherheitsfunktionen 6 oder Sensorfunktionen ausgeführt werden.

Die Ausführungsüberwachungseinheit 3.1 überwacht, dass alle freigeschalteten Sicherheitsfunktionen 6 auch ausgeführt werden. Im Falle eines Ausführungsfehlers wird das Sicherheitssystem 4 in den physisch sicheren Zustand unter Verwendung der sicheren Verarbeitungseinheit 8.1 überführt. Die Ausführungsüberwachungseinheit 3.1 sichert, dass alle freigeschalteten Sicherheitsfunktionen 6 auch zwingend ausgeführt werden. Dadurch wird verhindert, dass wichtige Sicherheitsfunktionen 6 nicht inaktiv sind, sondern es wird dafür gesorgt, dass die Sicherheitsfunktionen 6, die freigeschaltet sind, auch aktiv sind.

Damit erfolgt durch die Ausführungsüberwachungseinheit 3.1 eine sichere Überwachung, dass freigeschaltete funktional sichere Sicherheitsfunktionen 6 auch zwingend ausgeführt werden.

Die Ausführungsschutzeinheit 2.1 hat Lesezugriff auf den Sicherheitsspeicher 1.1, um festzustellen, ob die Sicherheitsfunktion 6 entriegelt ist, um die Ausführung der entriegelten bzw. entsperrten Sicherheitsfunktion 6 zu starten.

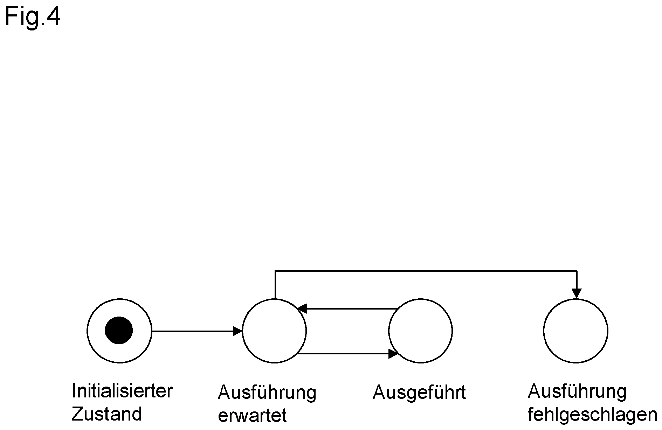

Figur 4 zeigt die Statusangaben in der Ausführungsüberwachungseinheit 3.1 aus Figur 1. Die Ausführungsüberwachungseinheit 3.1 hat auch Lesezugriff auf den Sicherheitsspeicher 1.1 und überwacht die Ausführung der entsperrten Sicherheitsfunktionen 6 durch einen gesetzten Status "AUSFÜHRUNG ERWARTET" für nicht gesperrte Sicherheitsfunktionen 6. Wenn die Ausführung einer entsperrten Sicherheitsfunktion 6 beendet ist, wird der Status auf "AUSGEFÜHRT" gesetzt. Vor einer nächsten zyklischen Iteration wird der Status wieder auf "AUSFÜHRUNG ERWARTET" gesetzt.

Wenn die entsperrte Sicherheitsfunktion 6 nicht ausgeführt wird, setzt die Ausführungsüberwachungseinheit 3.1 den Status "AUSFÜHRUNG FEHLGESCHLAGEN" und das Sicherheitssystem 4 geht in einen physisch sicheren Zustand über, mittels der Verarbeitungseinheit 8.1. Beispielsweise werden sichere Ausgänge von der Verarbeitungseinheit 8.1 deaktiviert.

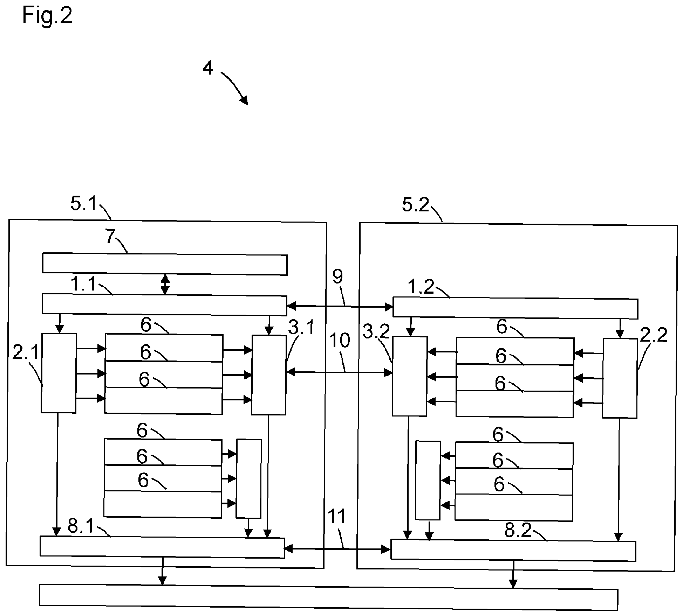

Figur 2 zeigt ein Sicherheitssystem 4 mit einem ersten Sicherheitskanal 5.1 zur Ausführung und Verwaltung von Sicherheitsfunktionen 6, wobei der erste Sicherheitskanal 5.1 eine Lizenzschlüsselverwaltungseinheit 7 für Lizenzen für Sicherheitsfunktionen 6 und einen ersten Sicherheitsspeicher 1.1 für Sicherheitsfunktionen 6 aufweist, wobei der erste Sicherheitskanal 5.1 eine erste Ausführungsschutzeinheit 2.1 für Sicherheitsfunktionen 6 und eine erste Ausführungsüberwachungseinheit 3.1 für Sicherheitsfunktionen 6 und eine erste sichere Verarbeitungseinheit 8.1 zur Ausgabe eines Sicherheitsstatus aufweist.

Gemäß Figur 2 ist in dem Sicherheitssystem 4 ein zweiter Sicherheitskanal 5.2 vorgesehen, wobei der erste Sicherheitskanal 5.1 und der zweite Sicherheitskanal 5.2 parallel angeordnet sind, wobei der zweite Sicherheitskanal 5.2 einen zweiten Sicherheitsspeicher 1.2 für Sicherheitsfunktionen 6, eine zweite Ausführungsschutzeinheit 2.1 für Sicherheitsfunktionen 6, und eine zweite Ausführungsüberwachungseinheit 3.2 für Sicherheitsfunktionen 6 und eine zweite sichere Verarbeitungseinheit 8.2 zur Ausgabe eines Sicherheitsstatus aufweist, wobei zwischen dem ersten Sicherheitsspeicher 1.1 und dem zweiten Sicherheitsspeicher 1.2 eine Sicherheitsspeicher-Kommunikationsverbindung 9 vorgesehen ist, wobei zwischen der ersten Ausführungsüberwachungseinheit 3.1 und der zweiten Ausführungsüberwachungseinheit 3.2 eine Ausführungsüberwachungseinheit-Kommunikationsverbindung 10 vorgesehen ist und wobei zwischen der ersten sicheren Verarbeitungseinheit 8.1 und der zweiten sicheren Verarbeitungseinheit 8.2 eine Verarbeitungseinheit-Kommunikationsverbindung 11 vorgesehen ist.

Gemäß Figur 2 liegt ein zweikanaliges Sicherheitssystem 4 vor, wobei beide Kanäle die wesentlichen Komponenten nämlich den Sicherheitsspeicher 1.1, die Ausführungsschutzeinheit 2.1 und die Ausführungsüberwachungseinheit 3.1 aufweisen. Mittels der zugehörigen Kommunikationsverbindungen 9, 10, 11 erfolgen zugehörige Gegenkontrollen und Diagnosen zur Gewährleistung der Sicherheitsintegrität.

Beispielsweise ist der Sicherheitsspeicher 1.1 ausgebildet, Sicherheitsfunktionen 6 zu sperren oder freizugeben.

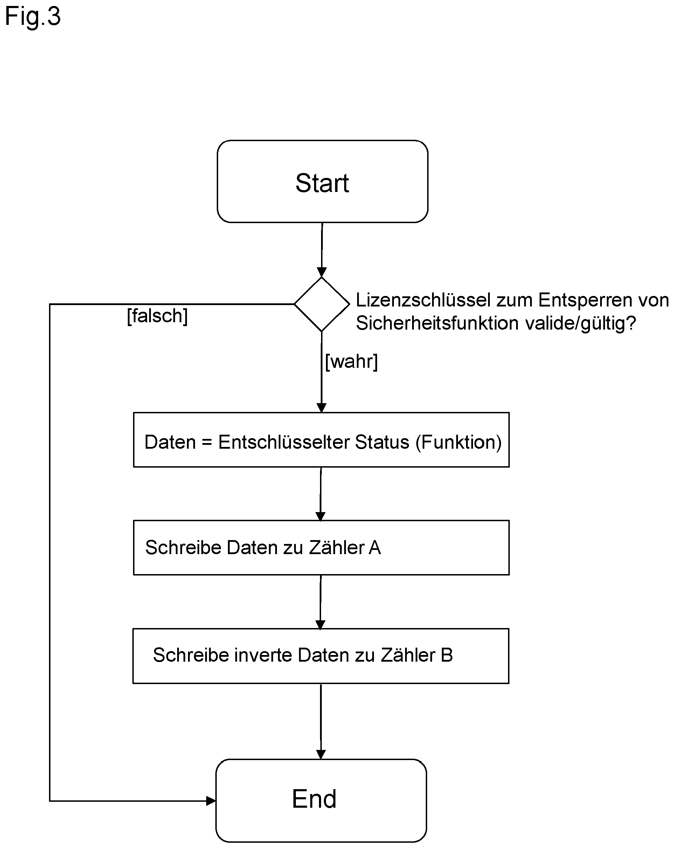

Gemäß Figur 3 speichert der Sicherheitsspeicher 1.1 gemäß Figur 1 für jede Sicherheitsfunktion 6, ob die Funktion entriegelt (Zustand "NICHT GESPERRT") oder verriegelt ist (Zustand "GESPERRT"). Der voreingestellte Standardzustand ist beispielsweise "GESPERRT". Die Zustände werden intern verschlüsselt und in Variablen, beispielsweise Zählern, beispielsweise ähnlich virtuellen Sicherungen gespeichert, die emulieren, dass sie beispielsweise nur ein einziges Mal geschrieben werden können, um zu verhindern, dass entsperrte Funktionen aufgrund von Speicherfehlern wieder gesperrt werden.

Nach dem Ausschöpfen der Aktivierungen kann mittels kryptografischer Hashfunktion (z.B. HMAC mit SHA-512) über die Aktivierungszustände deren Status unveränderlich eingefroren werden. Eine normale Checksumme wie CRC16 wäre dafür nicht ausreichend, weil diese ohne Probleme manipulierbar/errechenbar wäre.

Beispielsweise weist der Sicherheitsspeicher 1.1 pro Sicherheitsfunktion 6 einen Zähler auf, um eine Sperrung oder eine Freigabe zu zählen und die Sicherheitsfunktionen 6 nur für eine begrenzte Anzahl zu sperren oder freizugeben. Um dies zu gewährleisten, wird pro Sicherheitsfunktion 6 ein Zähler vorgesehen und ein Zählerwert gespeichert, wobei der Zählerwert angibt, wie oft ein Schreibzugriff stattgefunden hat. Um dem Anwender bzw. Kunden mehr Flexibilität zu geben, kann beispielsweise ein einmaliges, ein zweimaliges oder ein dreimaliges Freigeben oder Sperren einer Sicherheitsfunktion 6 vorgesehen sein.

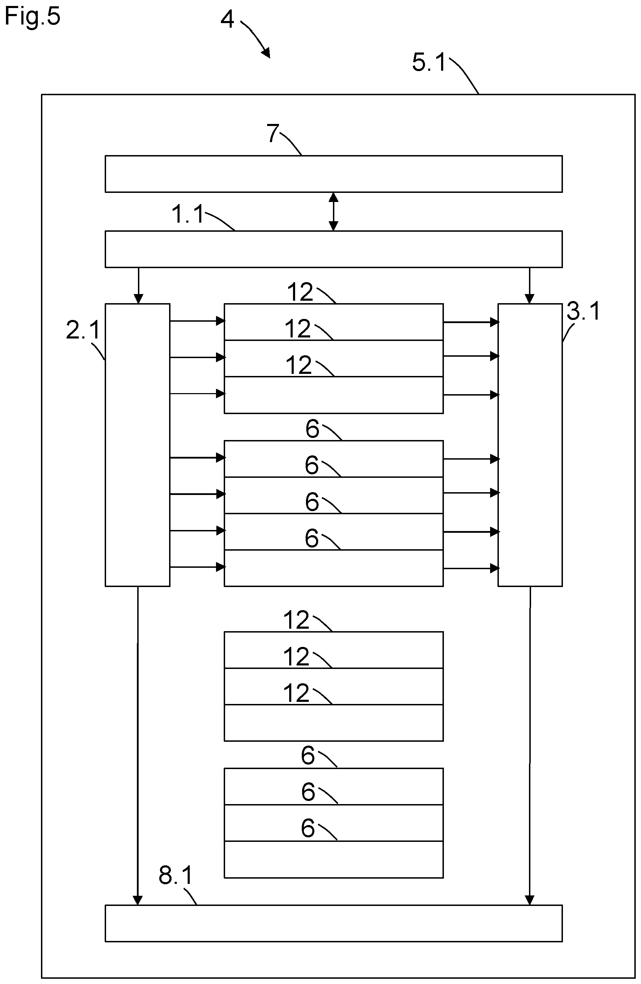

Figur 5 zeigt Sicherheitssystem 4 mit einem ersten Sicherheitskanal 5.1 zur Ausführung und Verwaltung von Sicherheitsfunktionen gemäß Figur 1 mit zusätzlichen nicht sicheren Funktionen also Standardfunktionen 12.

### Bezugszeichen:

1.1 erster Sicherheitsspeicher
1.2 zweiter Sicherheitsspeicher
2.1 erste Ausführungsschutzeinheit
2.2 zweite Ausführungsschutzeinheit
3.1 erste Ausführungsüberwachungseinheit
3.2 zweite Ausführungsüberwachungseinheit
4 Sicherheitssystem
5.1 erster Sicherheitskanal
5.2 zweiter Sicherheitskanal
6 Sicherheitsfunktion
7 Lizenzschlüsselverwaltungseinheit
8.1 erste sichere Verarbeitungseinheit
8.2 zweite sichere Verarbeitungseinheit
9 Sicherheitsspeicher-Kommunikationsverbindung
10 Ausführungsüberwachungseinheit-Kommunikationsverbindung
11 Verarbeitungseinheit-Kommunikationsverbindung
12 nicht sichere Standardfunktion

## Patentansprüche

1. Sicherheitssystem (4) mit einem ersten Sicherheitskanal (5.1) zur Ausführung und Verwaltung von Sicherheitsfunktionen (6), wobei der erste Sicherheitskanal (5.1)
eine Lizenzschlüsselverwaltungseinheit (7) für Lizenzen für die Sicherheitsfunktionen (6),
einen ersten Sicherheitsspeicher (1.1) für die Sicherheitsfunktionen (6), eine erste Ausführungsschutzeinheit (2.1) für die Sicherheitsfunktionen (6), und eine erste Ausführungsüberwachungseinheit (3.1) für die Sicherheitsfunktionen (6) aufweist, wobei die erste Ausführungsschutzeinheit (2.1) sicherstellt, dass nur freigeschaltete Sicherheitsfunktionen ausgeführt werden, wobei der Sicherheitsspeicher (1.1) auf sichere Art und Weise speichert, welche der Sicherheitsfunktionen (6) von einem Anwender mit Lizenzschlüssel von der Lizenzschlüsselverwaltungseinheit (7) freigeschaltet wurden, wobei durch die erste Ausführungsüberwachungseinheit (3.1) eine sichere Überwachung erfolgt, dass die freigeschalteten Sicherheitsfunktionen auch zwingend ausgeführt werden, und eine erste sichere Verarbeitungseinheit (8.1) zur Ausgabe eines Sicherheitsstatus aufweist, wobei im Falle eines Ausführungsfehlers das Sicherheitssystem (4) in einen physisch sicheren Zustand unter Verwendung der sicheren Verarbeitungseinheit (8.1) überführt wird, wobei sichere Ausgänge von der Verarbeitungseinheit (8.1) deaktiviert werden.

2. Sicherheitssystem (4) nach Anspruch 1, **dadurch gekennzeichnet, dass** ein zweiter Sicherheitskanal (5.2) vorgesehen ist, wobei der erste Sicherheitskanal (5.1) und der zweite Sicherheitskanal (5.2) parallel angeordnet sind, wobei der zweite Sicherheitskanal (5.2)
einen zweiten Sicherheitsspeicher (1.2) für die Sicherheitsfunktionen (6), eine zweite Ausführungsschutzeinheit (2.2) für die Sicherheitsfunktionen (6), und eine zweite Ausführungsüberwachungseinheit (3.2) für die Sicherheitsfunktionen (6),
und eine zweite sichere Verarbeitungseinheit (8.2) zur Ausgabe eines Sicherheitsstatus aufweist,
wobei zwischen dem ersten Sicherheitsspeicher (1.1) und dem zweiten Sicherheitsspeicher (1.2) eine Sicherheitsspeicher-Kommunikationsverbindung (9) vorgesehen ist,
wobei zwischen der ersten Ausführungsüberwachungseinheit (3.1) und der zweiten Ausführungsüberwachungseinheit (3.2) eine Ausführungsüberwachungseinheit-Kommunikationsverbindung (10) vorgesehen ist,
wobei zwischen der ersten sicheren Verarbeitungseinheit (8.1) und der zweiten sicheren Verarbeitungseinheit (8.2) eine Verarbeitungseinheit-Kommunikationsverbindung (11) vorgesehen ist, wobei mittels der zugehörigen Kommunikationsverbindungen (10, 11) zugehörige Gegenkontrollen und Diagnosen zur Gewährleistung der Sicherheitsintegrität erfolgen.

3. Sicherheitssystem (4) nach einem der vorhergehenden Ansprüche, **dadurch gekennzeichnet, dass** der Sicherheitsspeicher (1.1, 1.2) ausgebildet ist, die Sicherheitsfunktionen (6) zu sperren oder freizugeben.

4. Sicherheitssystem (4) nach Anspruch 3, **dadurch gekennzeichnet, dass** der Sicherheitsspeicher (1.1, 1.2) pro Sicherheitsfunktion (6) einen Zähler aufweist, um eine Sperrung oder eine Freigabe zu zählen und die Sicherheitsfunktionen (6) nur für eine begrenzte Anzahl zu sperren oder freizugeben.

## Claims

1. Safety system (4) with a first safety channel (5.1) for executing and managing safety functions (6), wherein the first safety channel (5.1) comprises a license key management unit (7) for licenses for the safety functions (6),
a first safety memory (1.1) for the safety functions (6)
a first execution protection unit (2.1) for the safety functions (6),
and a first execution monitoring unit (3.1) for the safety functions (6), wherein the first execution protection unit (2.1) ensures that only unlocked safety functions are executed, wherein the safety memory (1.1) securely stores which of the safety functions (6) have been unlocked by a user with a license key from the license key management unit (7), wherein by the first execution monitoring unit (3.1) secure monitoring is carried out to ensure that the activated safety functions are also compulsorily executed,
and comprises a first secure processing unit (8.1) to output a safety status, wherein in the event of an execution failure, the safety system (4) is transferred to a physically safe state using the secure processing unit (8.1), wherein safe outputs from the processing unit (8.1) are disabled.

2. A safety system (4) according to claim 1, **characterized in that** a second safety channel (5.2) is provided, wherein the first safety channel (5.1) and the second safety channel (5.2) are arranged in parallel,
where the second safety channel (5.2) comprises
a second safety memory (1.2) for the safety functions (6),
a second execution protection unit (2.2) for the safety functions (6),
and a second execution monitoring unit (3.2) for the safety functions (6),
and a second secure processing unit (8.2) to output a safety status,
wherein a safety memory communication link (9) is provided between the first safety memory (1.1) and the second safety memory (1.2),
wherein an execution monitoring unit communication link (10) is provided between the first execution monitoring unit (3.1) and the second execution monitoring unit (3.2),
wherein a processing unit communication link (11) is provided between the first secure processing unit (8.1) and the second secure processing unit (8.2), wherein associated cross-checks and diagnostics are carried out by means of the associated communication links (10, 11) to ensure safety integrity.

3. A safety system (4) according to any of the preceding claims, **characterized in that** the safety memory (1.1, 1.2) is designed to lock or release the safety functions (6).

4. A safety system (4) according to claim 3, **characterized in that** the safety memory (1.1, 1.2) comprises one counter per safety function (6) to count a lock or release and to lock or release the safety functions (6) only for a limited number.

## Revendications

1. Système de sécurité (4) avec un premier canal de sécurité (5.1) pour l'exécution et la gestion des fonctions de sécurité (6), dans lequel le premier canal de sécurité (5.1) comporte
une unité de gestion des clés de licence (7) pour des licences pour les fonctions de sécurité (6),
une première mémoire de sécurité (1.1) pour les fonctions de sécurité (6),
une première unité de protection d'exécution (2.1) pour les fonctions de sécurité (6),
et une première unité de surveillance d'exécution (3.1) pour les fonctions de sécurité (6), dans lequel la première unité de protection d'exécution (2.1) garantit que seules les fonctions de sécurité déverrouillées sont exécutées, dans lequel la mémoire de sécurité (1.1) stocke en toute sécurité lesquelles des fonctions de sécurité (6) ont été déverrouillées par un utilisateur avec une clé de licence à partir d'une unité de gestion des clés de licence (7), dans lequel par la première unité de surveillance d'exécution (3.1), une surveillance sécurisée est effectuée pour assurer que les fonctions de sécurité déverrouillées sont également exécutées obligatoirement,
et comporte une première unité de traitement de sécurité (8.1) pour émettre un état de sécurité, dans lequel, en cas de défaillance d'exécution, le système de sécurité (4) est transféré à un état de sécurité physique à l'aide de l'unité de traitement de sécurité (8.1), dans lequel les sorties de sécurité sont désactivées par l'unité de traitement de sécurité (8.1).

2. Système de sécurité (4) selon la revendication 1, **caractérisé en ce qu'**un deuxième canal de sécurité (5.2) est prévu, dans lequel le premier canal de sécurité (5.1) et le deuxième canal de sécurité (5.2) sont disposés en parallèle, dans lequel le deuxième canal de sécurité (5.2) comporte une deuxième mémoire de sécurité (1.2) pour les fonctions de sécurité (6),
une deuxième unité de protection d'exécution (2.2) pour les fonctions de sécurité (6),
et une deuxième unité de surveillance d'exécution (3.2) pour les fonctions de sécurité (6),
et une deuxième unité de traitement de sécurité (8.2) pour émettre un état de sécurité,
dans lequel une liaison de communication de mémoire de sécurité (9) est prévue entre la première mémoire de sécurité (1.1) et la deuxième mémoire de sécurité (1.2),
dans lequel une liaison de communication d'unité de surveillance d'exécution (10) est prévue entre la première unité de surveillance d'exécution (3.1) et la deuxième unité de surveillance d'exécution (3.2),
dans lequel une liaison de communication d'unité de traitement (11) est prévue entre la première unité de traitement de sécurité (8.1) et la deuxième unité de traitement de sécurité (8.2), dans Ilequel au moyen des liaisons de communication associées (10, 11), des contre-contrôles et des diagnostics associés sont effectués pour garantir l'intégrité de la sécurité.

3. Système de sécurité (4) selon l'une des revendications précédentes, **caractérisé en ce que** la mémoire de sécurité (1.1, 1.2) est configurée pour bloquer ou débloquer les fonctions de sécurité (6).

4. Système de sécurité (4) selon la revendication 3, **caractérisé en ce que** la mémoire de sécurité (1.1, 1.2) comporte un compteur par fonction de sécurité (6) pour compter un blocage ou un déblocage et pour bloquer ou débloquer les fonctions de sécurité (6) uniquement pour un nombre limité.
